# EUROPÄISCHE PATENTSCHRIFT

(11) **EP 3 393 942 B1**
(45) Veröffentlichungstag und Bekanntmachung des Hinweises auf die Patenterteilung: **13.04.2022**
(21) Anmeldenummer: 16819096.5
(22) Anmeldetag: 22.12.2016
(51) Int. Cl.: B65G 17/20, B65G 47/61

(54) **KETTENGLIED FÜR EINE MEHRGLIEDRIGE FÖRDERKETTE EINER HÄNGEFÖRDERANLAGE**
CHAIN LINK FOR A MULTI-LINK CONVEYOR CHAIN OF AN OVERHEAD CONVEYOR SYSTEM
MAILLON DE CHAÎNE POUR UNE CHAÎNE DE CONVOYEUR À PLUSIEURS ÉLÉMENTS D'UNE INSTALLATION DE CONVOYEUR SUSPENDU

(30) Priorität: 22.12.2015 DE 202015106982 U
(43) Veröffentlichungstag der Anmeldung: 31.10.2018
(73) Patentinhaber: SSI Schäfer Automation GmbH, 8051 Graz-Gösting (AT)
(72) Erfinder: BUCHMANN, Rainer, 8046 Graz (AT)
(74) Vertreter: Witte, Weller & Partner Patentanwälte mbB
(86) Internationale Anmeldenummer: PCT/EP2016/082319
(87) Internationale Veröffentlichungsnummer: WO 2017/109042

(56) Entgegenhaltungen:
- EP-A1- 0 515 336
- EP-A2- 0 223 999
- EP-A2- 0 243 582
- EP-A2- 1 081 078
- CA-A1- 2 100 719
- DE-A1- 2 519 610
- GB-A- 2 079 708
- US-A- 5 575 379

## Beschreibung

Die vorliegende Erfindung betrifft ein Kettenglied für eine mehrgliedrige Förderkette. Die vorliegende Erfindung betrifft ferner die mehrgliedrige Förderkette. Die vorliegende Erfindung betrifft insbesondere eine entsprechende Hängeförderanlage.

Generell betrifft die vorliegende Erfindung ein Kettenglied einer Förderkette, das zur schleppenden Beförderung von sog. Halte- bzw. Hängeförder-Adapter eingerichtet ist. Exemplarische Hängeförder-Adapter (nachfolgend auch kurz nur als "Adapter" bezeichnet) sind z.B. in den Dokumenten DE 10 2013 100 132 A1, DE 10 2014 203 239 A1 und EP 2 363 358 A2 gezeigt. Die dort gezeigten Adapter weisen eine oder mehrere Laufrollen und/oder eine oder mehrere Führungsrollen auf, mit denen sie entlang einer Führungsschiene (Profil) zwangsgeführt werden. In einem unteren Bereich der Adapter sind ösenförmige Öffnungen zum Einhängen von Bügelköpfen vorgesehen. In einem oberen Bereich der Adapter sind Mitnehmerabschnitte vorgesehen, die direkt oder indirekt in eine Antriebskette eingreifen. Die Antriebskette ist vertikal oberhalb der Adapter vorgesehen. Um eine Mitnahme der Adapter in der horizontalen Richtung zu bewirken, wird in der vertikalen Richtung durch die Antriebskette ein Druck auf die Mitnehmerabschnitte ausgeübt. Stößt ein mitgenommener Adapter auf ein (horizontales) Hindernis, kann die Antriebskette in der vertikalen Richtung nach oben ausweichen, um in der horizontalen Richtung über den blockierten Adapter hinweg bewegt zu werden. Ein entsprechender Wirkmechanismus ist in der DE 10 2014 203 239 A1 und der EP 2 363 358 A2 gezeigt.

Die DE 10 2013 100 132 A1 zeigt einen ähnlichen Wirkmechanismus, der ebenfalls in der vertikalen Richtung wirkt, wobei die Antriebskette mittels eines horizontal seitlich angeordneten Reibrollenantriebs angetrieben wird und wobei die Kettenglieder mehrteilig einstückig ausgebildet sind. Jedes Kettenglied der DE 10 2013 100 132 A1 weist einen Basiskörper, mehrere Federelemente und einen Schubkörper auf. Der Reibrollenantrieb greift horizontal seitlich an den Basiskörper an, der in einem oberen Bereich angeordnet ist. Der Basiskörper ist oberhalb der Federelemente angeordnet. Der Schubkörper ist in einem unteren Bereich angeordnet, so dass die Federelemente vertikal zwischen dem Basiskörper und dem Schubkörper angeordnet sind. Die Federelemente sind so ausgebildet, dass der Schubkörper im Falle eines Staus (Blockade eines oder mehrerer Adapter) vertikal elastisch nach oben ausweichen kann, während der Basiskörper keine Relativbewegung in der vertikalen Richtung ausführt.

Bei seitlichen Reibrollenantrieben ist generell nachteilig, dass Schlupf zwischen dem Reibrollenantrieb und den Kettengliedern auftreten kann. Dies hat Auswirkungen auf eine Steuerung, wenn wegabhängig gesteuert wird, wie es z.B. in der DE 10 2010 053 426 B3 beschrieben ist. Dies kann die Positionsbestimmung von Adaptern innerhalb der Hängeförderanlage erschweren. Die DE 10 2010 053 426 B3 schlägt deshalb vor, zusätzlich seitliche Formschlussabschnitte an den Kettengliedern vorzusehen, um einen Vorschub zu synchronisieren.

Obwohl die beiden Antriebsketten (Rollenketten) der DE 10 2014 203 239 A1 und EP 2 363 358 A2 formschlüssig mittels Zahnrädern angetrieben werden, so dass kein Schlupf auftreten kann, erfolgt der Antrieb dennoch horizontal seitlich, um der Kette in der vertikalen Richtung ausreichend Raum zum Ausweichen zu geben, damit die Kette über gestaute Adapter hinweg bewegt werden kann. Die Zahnräder des Antriebs liegen also seitlich zur Kette in einer horizontalen Ebene, wohingegen die Wechselwirkung (Anpressdruck, Mitnahme, etc.) zwischen der Antriebskette und den Adaptern in einer vertikalen Ebene erfolgt. Ein derartiger Antriebsmechanismus ist konstruktiv aufwändig, weil auch hier der Antrieb seitlich an die Antriebskette koppeln muss, wo oft weitere Komponenten der Förderanlage angeordnet sind, wie z.B. Stoppeinrichtungen, Weichen, Lichtschranken und ähnliche Elemente, die für eine Materialflusssteuerung benötigt werden.

Das Dokument US 2005/103602 A1 beschreibt gemäß seiner Zusammenfassung einen Förderer, der zum Fördern von Objekten entlang einer Transportrichtung geeignet ist, und verwandte Verbindungen. Der Förderer umfasst mehrere verbundene Verbindungen, wobei jede Verbindung eine Länge aufweist, die sich über die Transportrichtung erstreckt, und eine Breite, die sich entlang der Transportrichtung erstreckt. Jedes Glied hat auch einen Körper, ein Nockenstößelelement und mindestens ein Greifelement. Ein Zahnradantriebsmechanismus kann verwendet werden, um das Nockenstößelelement und das Greifelement zu verbinden. Das Nockenstößelelement ist beweglich, um das Greifelement selektiv zwischen einer ersten Position und einer zweiten Position zu bewegen. Das Greifelement in der ersten Position ist in einer offenen Position angeordnet und das Greifelement in der zweiten Position ist in einer Greifposition angeordnet, um eines der Objekte zu berühren, um das Objekt während des Transports zu halten. Zahnradantriebsmechanismen verschiedener Bauart können verwendet werden, um das Nockenstößelelement und das Greifelement miteinander zu verbinden. Ein lösbares Halteelement, wie beispielsweise ein federbelastetes Ratschenelement, kann verwendet werden, um das Greifelement in der zweiten Position zu sichern. Die unabhängigen Ansprüche wurden gegenüber dem Dokument US 2005/103602 A1 abgegrenzt, das nach der Auffassung der Erteilungsbehörde den nächstliegenden Stand der Technik und den Oberbegriff der unabhängigen Ansprüche zeigt.

Es ist daher eine Aufgabe der vorliegenden Erfindung, ein verbessertes Kettenglied für eine Förderkette einer Hängeförderanlage sowie eine Förderkette und eine Förderanlage vorzusehen, die Hängeförder-Adapter schleppend durch die Anlage bewegen und die die oben beschriebenen Nachteile überwinden.

Mit dem Kettenglied lässt sich eine mehrgliedrige Förderkette aufbauen, die die (Hängeförder-)Adapter schleppend entlang einer Führungsschiene bewegt. Die Mitnahme der Adapter durch die Kette erfolgt kraftschlüssig. Der Kraftschluss wird durch eine seitliche Schwenkbewegung des Schwenkkörpers zum relativ gesehen unbeweglichen Hauptkörper hergestellt bzw. gelöst. Das Federelement zwingt den Schwenkkörper in seine (geschlossene) Ausgangsstellung, in welcher das Kettenglied die Adapter üblicherweise mitnimmt, sofern der Adapter in der Förderrichtung nicht blockiert (z.B. gestaut oder gestoppt) wird.

Ein Reibrollenantrieb wird nicht benötigt. Das Kettenglied bzw. zusammenhängende Kettenglieder werden über die Antriebskette angetrieben, die wiederum formschlüssig angetrieben wird. Der Antriebskettenantrieb wiederum lässt sich vertikal z.B. oberhalb der Antriebskette anordnen und stört somit keine seitlich angeordneten Komponenten der Hängefördertechnikanlage, wie z.B. Stoppeinrichtungen, Lichttaster oder -schranken, Weichen und ähnliche Materialfluss-beeinflussende Komponenten. Die Antriebskette, auf die die Antriebskraft unmittelbar ausgeübt wird, lässt sich z.B. durch eine Führungsschiene bzw. ein Führungsprofil auf engstem Raum führen. Größere Toleranzen, wie z.B. Ausweichräume in der vertikalen Richtung, werden nicht benötigt, weil die Antriebskette sich nicht relativ zum Kettenglied bewegen muss, um die Adapter im Falle eines Staus oder eines Hindernisses freizugeben.

Eine entsprechend ausgerüstete Hängeförderanlage lässt sich wegabhängig steuern, z.B. indem die formschlüssig angetriebenen Glieder der Antriebskette (inkrementell) gezählt werden.

Eine Geräuschentwicklung während des Betriebs ist verhältnismäßig gering.

Die Kettenglieder lassen sich einfach an der Antriebskette montieren, indem man sie z.B. aufsteckt.

Das Kettenglied erlaubt Fördergeschwindigkeiten von 0,1 m/s bis zu 1 m/s, vorzugsweise von 0,75 m/s.

Eine Anpresskraft, d.h. eine Kraft, mit der der Schwenkkörper in der Eingriffsstellung gehalten wird, lässt sich durch das Federelement exakt einstellen, indem z.B. eine geeignete Federart und/oder eine geeignete Federkonstante gewählt wird. Die Anpresskraft hängt von einem Reibungskoeffizienten zwischen dem Adapter einerseits und dem Hauptkörper und dem Schwenkkörper andererseits ab.

Das Kettenglied der Erfindung kann eine durchschnittliche Lebensdauer von mindestens 15.000 Betriebsstunden haben, ohne dass es zu Funktionseinschränkungen kommt. Das Kettenglied kann in einem Temperaturbereich von + 4 °C bis + 45°C eingesetzt werden. Die Luftfeuchtigkeit während des Betriebs darf bis zu 95 % oder mehr betragen.

Vorzugsweise ist das Kettenglied aus einem Material gefertigt, das eine elektrostatische Aufladung hemmt bzw. vermeidet. Insbesondere kann ein elektrisch leitender Kunststoff eingesetzt werden, um sich aufbauende Ladungen z.B. über die ebenfalls vorzugsweise elektrisch leitend ausgeführte Führungsschiene abzuleiten.

Der Hauptkörper und der Schwenkkörper sind über eine Schwenkachse aneinander gekoppelt.

Auf diese Weise lässt sich ein mehrteiliges Kettenglied realisieren. Die Schwenkachse kann als separates Bauteil ausgeführt sein, wie z.B. durch einen Stahlstift, der in entsprechende Öffnungen im Hauptkörper und im Schwenkkörper einführbar ist. Wenn der Hauptkörper und der Schwenkkörper z.B. aus Kunststoff hergestellt sind, kann die Schwenkachse alternativ in eine entsprechende Spritzgussform eingelegt werden. In diesem Fall kann die Schwenkachse auch aus einem elastischen Material, wie z.B. Gummi, bestehen.

Alternativ sind der Hauptkörper und der Schwenkkörper einteilig miteinander ausgebildet, wobei vorzugsweise ein weiteres separates Federelement, wie z.B. ein Gummiblock, vorhanden ist.

Wenn der Hauptkörper und der Schwenkkörper einteilig miteinander ausgebildet sind, kommt vorzugsweise ein elastischer Kunststoff zum Einsatz, aus dem der Hauptkörper und der Schwenkkörper z.B. mittels Spritzguss hergestellt werden. Die dem Kunststoff inhärente Elastizität sorgt dafür, dass der Schwenkkörper (z.B. durch eine geeignete Wahl der Materialstärke des Schwenkkörpers) relativ zum Hauptkörper elastisch beweglich ist. Der Hauptkörper ist in diesem Fall, z.B. aufgrund einer relativ großen Masse, starr bzw. unbeweglich relativ zum Schwenkkörper.

Bei einer weiteren vorteilhaften Ausgestaltung weisen der Hauptkörper und der Schwenkkörper jeweils eine zangenförmige Aufnahmebacke auf, die einen Hohlraum zwischen sich begrenzen, in der der Mitnehmerabschnitt des Adapters aufnehmbar ist.

Die zangenförmigen Aufnahmebacken des Hauptkörpers und des Schwenkkörpers reduzieren die (Kontakt-)Fläche, und somit den Verschleiß bzw. Abrieb, insbesondere im Staubetrieb. Während des Staubetriebs, also wenn der Adapter auf ein Hindernis stößt und nicht mehr durch das Kettenglied mitgenommen werden kann, schwenkt der Schwenkkörper horizontal seitlich aus der Eingriffsstellung in die Freigabestellung, in welcher der Schwenkkörper aber noch immer in die Eingriffsstellung zurückgezwungen wird. In diesem Falle drückt der Schwenkkörper gegen den Mitnehmerabschnitt des Adapters. Da sich die Kette aber weiterhin kontinuierlich fortbewegt, reibt der Schwenckörper (und der Hauptkörper) am Adapter.

Bei einer weiteren bevorzugten Ausgestaltung definieren der Hauptkörper und der Schwenkkörper gemeinsam eine zusätzliche formschlüssige Aufnahme für den Mitnehmerabschnitt des Adapters zwischen sich, wobei die zusätzliche formschlüssige Aufnahme vorzugsweise durch vertikal angeordnete Ausnehmungen im Haupt- und/oder Schwenkkörper definiert ist, die sich gegenüberliegen.

Der zusätzliche Formschluss bewirkt, dass die Kraft, die durch das Federelement zum Zuhalten bzw. zum Herstellen des Kraftschlusses aufgewendet werden muss, entsprechend geringer ausfallen kann. Die formschlüssige Aufnahme könnte z.B. einen hexagonalen Querschnitt aufweisen, wenn der Mitnahmeabschnitt einen runden Querschnitt aufweist.

Weiter ist es von Vorteil, wenn der Schwenkkörper Kopplungselemente aufweist, um, vorzugsweise formschlüssig, an die Kopplungselemente von benachbarten Schwenkkörpern zu koppeln. Die Kopplungselemente sind vorzugsweise an einem stromaufwärtigen und stromabwärtigen Ende des Schwenkkörpers angeordnet, um an die benachbarten Schwenkkörper benachbarter Kettenglieder zu koppeln.

Die Kopplungselemente können z.B. durch Nut/Feder-Elemente realisiert sein. Sobald der Schwenkkörper eines ersten Kettenglieds im Staufall ausgelenkt wird, wird auch der Schwenkkörper des stromaufwärts angeordneten Nachbars automatisch mitausgelenkt. Damit verringert sich automatisch der Anpressdruck bzw. die Anpresskraft auf den Adapter, der stromaufwärts, d.h. nachfolgend zum bzw. hinter dem ersten Adapter, durch die (mehrgliedrige) Kette mitgeführt wird. Die Anpresskraft verringert sich also, vorzugsweise kontinuierlich, in einer stromaufwärtigen Richtung ausgehend von einem gestauten Adapter. Die Federkonstante der Kettenglieder ist dabei vorzugsweise so gewählt, dass sich die Anpresskraft bis zu 4 bis 5 Kettenglieder stromaufwärts zum Staupunkt verringert. Danach üben alle weiteren Kettenglieder stromaufwärts die übliche Anpresskraft auf die mitgenommenen Adapter aus. Dadurch wird erreicht, dass die Adapter in der Förderrichtung möglichst eng aufgestaut werden, ohne sie jedoch allzu großen Kräften (Abrieb/Verschleiß) auszusetzen. Ein weiterer Vorteil ist darin zu sehen, dass die oben erläuerte Staudruckentlastung auch bei variablen Stauabständen funktioniert. Herkömmliche staudruckarme Stauförderer funktionieren nur bei fixen Abständen.

Bei einer besonderen Ausgestaltung ist das Federelement eine Spiralfeder, die im Wesentlichen horizontal zwischen dem Hauptkörper und dem Schwenkkörper angeordnet ist, wobei die Spiralfeder derart vorgespannt ist und derart an den Hauptkörper sowie an den Schwenkkörper gekoppelt ist, dass der Schwenkkörper in der Ausgangsstellung in Richtung des Hauptkörpers gezwungen wird.

Der Begriff "im Wesentlichen horizontal" bedeutet in diesem Zusammenhang, dass die Spiralfeder gegenüber der Horizontalen auch leicht geneigt sein darf. Die Neigung ist so zu wählen, dass die Spiralfeder den Schwenkkörper immer horizontal in die Ausgangsstellung zurückzieht, sollte es zu einer Auslenkung des Schwenkkörpers aufgrund eines gestauten Adapters kommen.

Die Spiralfeder ist auch im montierten Zustand des Kettenglieds frei zugänglich, weil die Spiralfeder horizontal orientiert ist. Die Spiralfeder kann im Falle eines Bruchs ausgetauscht werden, ohne den Hauptkörper und den Schwenkkörper von der Antriebskette lösen zu müssen. Die Spiralfeder kann durch entsprechende seitliche Öffnungen im Hauptkörper und im Schwenkkörper ein- und ausgeführt werden. Die Fixierung der Spiralfeder in den Körpern kann durch einen Kraftschluss erfolgen, z.B. indem der Durchmesser der Spiralfeder leicht größer als der Durchmesser der horizontal orientierten Öffnungen im Hauptkörper und im Schwenkkörper ist.

Bei einer alternativen Ausführung ist das Federelement eine Blattfeder, die in der Ausgangsstellung im Wesentlichen vertikal zwischen dem Hauptkörper und dem Schwenkkörper angeordnet ist und derart an den Hauptkörper sowie an den Schwenkkörper gekoppelt ist, dass der Schwenkkörper im Falle einer horizontal seitlichen Auslenkung in Richtung des Hauptkörpers gezwungen wird.

Der Begriff "im Wesentlichen vertikal" bedeutet in diesem Zusammenhang, dass die Ausrichtung der Blattfeder leicht gegenüber der Vertikalen geneigt sein darf. Die vertikale Ausrichtung des Federelements ermöglicht den Einbau des Federelements in einem nicht gespannten Zustand. Erst wenn der Schwenkkörper seitlich horizontal ausgelenkt wird, baut sich im Federelement eine Spannung auf, die bewirkt, dass der Schwenkkörper in die Ausgangsstellung zurückgezwungen wird. Der Einbau des Federelements kann vertikal von unten erfolgen, auch wenn das Kettenglied bereits an der Antriebskette montiert ist. Dies erleichtert wiederum den Austausch defekter oder verschlissener Federelemente.

Bei einer weiteren Ausgestaltung weist der Hauptkörper mindestens ein Verbindungselement auf, um werkzeuglos dauerhaft mit der Antriebskette verbunden zu werden, und vorzugsweise auf die Antriebskette gesteckt zu werden.

Das Verbindungselement kann z.B. in Form einer Lasche mit einer entsprechenden Einschnittsöffnung ausgebildet sein, um den Hauptkörper auf Bolzen der Antriebskette aufzustecken. Die Antriebskette kann generell wie eine Fahrradkette (d.h. Rollenkette) aufgebaut sein, also mit Außenlaschen, Innenlaschen, Bolzen, Hülsen und Rollen. Man spricht in diesem Zusammenhang auch von einer Rollenkette.

Bei einer weiteren Ausgestaltung ist eine Vorspannung und/oder eine relative Anordnung des Federelements so gewählt, dass der Schwenkkörper aus der Eingriffsstellung in Richtung der Freigabestellung bewegt wird, sobald der Adapter in der Förderrichtung auf ein Hindernis, wie z.B. einen weiteren Adapter, einen Stopper, eine Weiche oder Ähnliches, trifft, während der Adapter kraft- und/oder formschlüssig zwischen dem Hauptkörper und dem Schwenkkörper fixiert ist.

Ferner wird die Aufgabe durch eine Förderkette mit einer Vielzahl von Kettengliedern gemäß der Erfindung gelöst.

Außerdem wird die Aufgabe durch eine Hängeförderanlage mit einer Förderkette gelöst, die wiederum erfindungsgemäße Kettenglieder aufweist.

Ausführungsbeispiele von Kettengliedern sind in der Zeichnung dargestellt und werden in der nachfolgenden Beschreibung näher erläutert, zum Verständnis der Erfindung. Es zeigen:
- Fig. 1: eine erste, rein kraftschlüssig wirkende Ausführungsform eines Kettenglieds in einer Eingriffsstellung (Fig. 1A) und in einer Freigabestellung (Fig. 1B), wenn man längs einer Förderrichtung auf das Kettenglied blickt;
- Fig. 2: eine perspektivische Ansicht einer Förderkette mit mehreren Hängeförder-Adaptern, wobei die Kettenglieder in einer weiteren Ausführungsform implementiert sind;
- Fig. 3: eine teilweise geschnittene Ansicht der Förderkette der Fig. 2;
- Fig. 4: eine perspektivische Ansicht von unten (Fig. 4A) auf eine Förderkette mit Kettenglieder der erfindungsgemäßer Ausführungsform und eine perspektivische Ansicht von oben (Fig. 4B);
- Fig. 5: eine Seitenansicht (Fig. 5A), eine Vorderansicht (Fig. 5B) und eine Draufsicht (Fig. 5C) eines einzelnen Kettenglieds gemäß der Erfindung;

- Fig. 6: eine Schnittansicht des Kettenglieds der Fig. 2; und
- Fig. 7: das Kettenglied der Fig. 2 in der Eingriffsstellung (Fig. 7A) und in der Freigabestellung (Fig. 7B).

Bei der nachfolgenden Beschreibung der Erfindung werden gleiche Teile und Merkmale mit gleichen Bezugszeichen versehen, wobei ähnliche Teile und Merkmale mit ähnlichen Bezugszeichen versehen werden. Die in der gesamten Beschreibung enthaltene Offenbarung ist sinngemäß auf die ähnlichen Teile und Merkmale mit den ähnlichen Bezugszeichen übertragbar. Lageangaben, wie z.B. oben, unten, seitlich, vertikal, horizontal und Ähnliches sind auf die unmittelbar beschriebene Figur bezogen und bei einer Lageänderung sinngemäß auf die neue Lage zu übertragen.

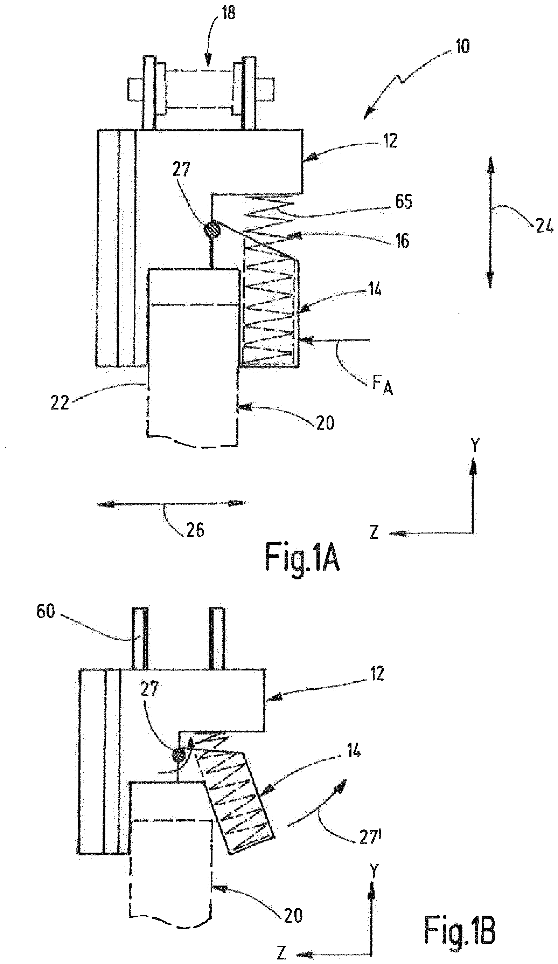

Die in der Intralogistik üblichen Orientierungsangaben werden vorliegend genutzt. Eine Längsrichtung, in der auch gefördert wird, ist mit X bezeichnet. Eine (seitliche) Querrichtung ist mit Z bezeichnet. Eine Höhenrichtung ist mit Y bezeichnet. Die Richtungen X, Y und Z bilden vorzugsweise ein kartesisches Koordinatensystem, wie es in den Fig. 1-5 gezeigt ist.

Die Fig. 1 zeigt eine Ausführungsform eines Kettenglieds 10 in einer Vorderansicht. Die Fig. 1A zeigt eine Ausgangsstellung bzw. Eingriffsstellung des Kettenglieds 10. Die Fig. 1B zeigt eine Freigabestellung des Kettenglieds 10 der Fig. 1A. Das Kettenglied 10 wird in der Fig. 1 auf den Betrachter zubewegt, d.h. senkrecht aus der Zeichnungsebene heraus.

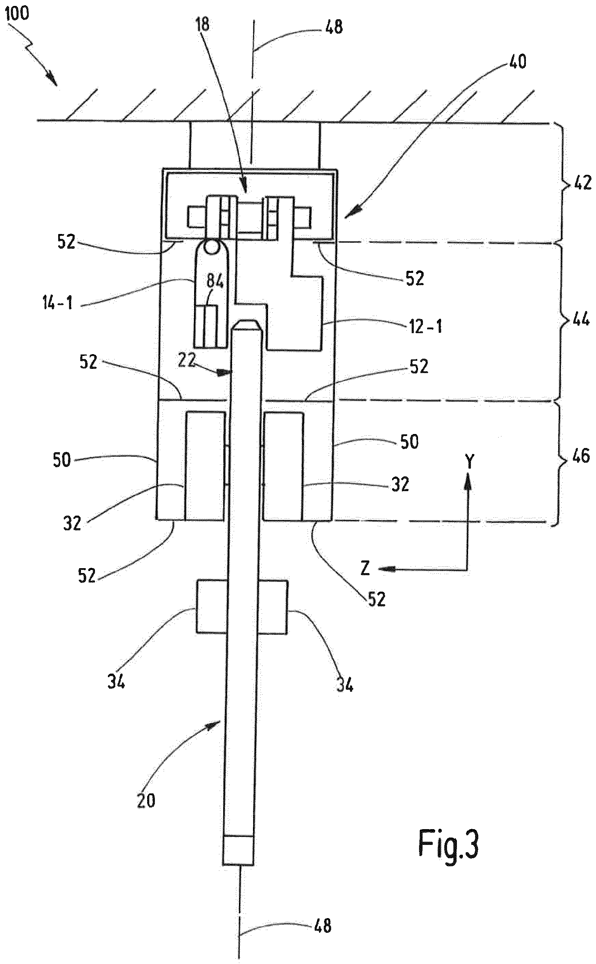

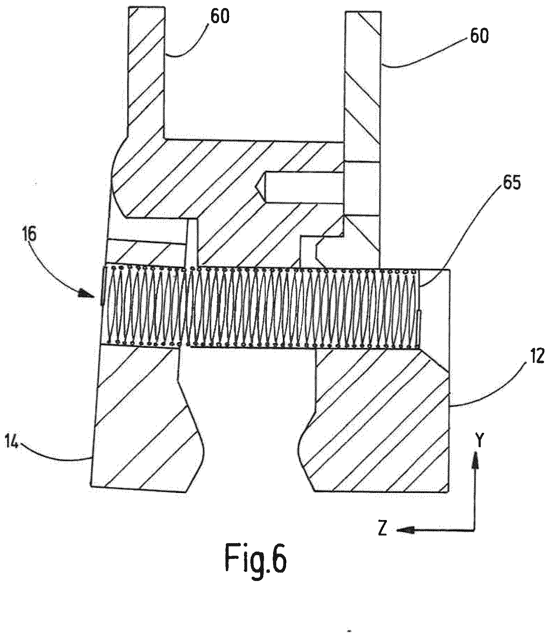

Das Kettenglied 10 weist generell einen Hauptkörper 12 auf, der vorzugsweise starr in einem Führungsprofil 40 (vgl. Fig. 3) lagerbar ist. Das Kettenglied 10 weist ferner einen beweglich lagerbaren (Schwenk-)Körper 14 sowie ein Federelement 16 auf. Das Federelement 16 ist in der Fig. 1 exemplarisch in Form einer Spiralfeder 65 implementiert (vgl. auch Fig. 6), wie es nachfolgend noch näher beschrieben werden wird.

Das Kettenglied 10 ist z.B. an eine Antriebskette 18 koppelbar, die in der Fig. 1A mit Strichlinien angedeutet und vertikal (vgl. Pfeil 24) oberhalb des Kettenglieds 10 angeordnet ist. In der Fig. 1 ist die Antriebskette 18 als Rollenkette mit nicht näher bezeichneten Laschen, Bolzen, Hülsen und Rollen ausgeführt. Die formschlüssig angetriebene Antriebskette 18 kann jedoch auch von einem anderen Typ sein, wie z.B. ein Riemen, ein Gurt, ein Seil bzw. an eine allgemeine lineare Antriebstechnik.

Vorzugsweise ist der Hauptkörper 12 mit der Antriebskette 18 verbunden und nicht der Schwenkkörper 14.

Der Hauptkörper 12 und der Schwenkkörper 14 klemmen einen (Hängeförder-)Adapter, der in der Hängefördertechnologie auch als "Carrier" bezeichnet wird, kraftschlüssig horizontal (vgl. Pfeil 26) zwischen sich ein, um den Adapter 20 schleppend senkrecht zur Zeichnungsebene zu bewegen. Das Federelement 16 ist vorzugsweise als Blattfeder ausgebildet, wie es nachfolgend noch näher beschrieben werden wird, wenn das Federelement 16 im Wesentlichen vertikal orientiert ist, wie es in der Fig. 1 gezeigt ist. Alternativ oder ergänzend kann das Federelement als Drehfeder (nicht gezeigt) ausgebildet sein.

Das Federelement 16 ist vorzugsweise so vorgespannt, dass der Schwenkkörper 14 horizontal seitlich in Richtung des Hauptkörpers 12 gezwungen wird, um eine Anpresskraft F_{A} auszuüben, die in der Fig. 1A angedeutet ist und die im Wesentlichen parallel zur Querrichtung Z orientiert ist. Bei der Ausführungsform des Kettenglieds 10 der Fig. 1 wird der Adapter 20 über ein Kopplungselement bzw. über einen Mitnehmerabschnitt 22 horizontal kraftschlüssig zwischen dem Hauptkörper 12 und dem Schwenkkörper 14 gehalten. Die Fixierung erfolgt im Beispiel der Fig. 1 rein durch einen Kraftschluss zwischen dem Mitnehmerabschnitt 22 und den Körpern 12 und 14.

Die Fig. 1B zeigt eine Freigabestellung des Kettenglieds 10. In der Freigabestellung hat sich der Schwenkkörper 14 seitlich horizontal (leicht) vom Adapter 20 weg bewegt, wie es durch einen Pfeil 27' angedeutet ist. Wenn die Mitnahme des Adapters 20 durch das Kettenglied 10 allein durch einen Kraftschluss erfolgt, wird der Schwenkkörper 14 nur minimal gegenüber dem Adapter 20 ausgelenkt, wenn der Adapter 20 in der Förderrichtung blockiert ist (z.B. durch einen Stopper oder einen Stau). Der Schwenkkörper 14 ist bei der Ausführungsform um eine Schwenkachse 27 (senkrecht zur Zeichnungsebene) schwenkbar gelagert. Die Schwenkachse 27 kann z.B. durch einen Stahlstift implementiert sein, der durch entsprechende Öffnungen in den Körpern 12 und 14 geführt ist, die hier nicht näher gezeigt und bezeichnet sind. Das Kettenglied 10 ist in diesem Fall mehrteilig ausgebildet.

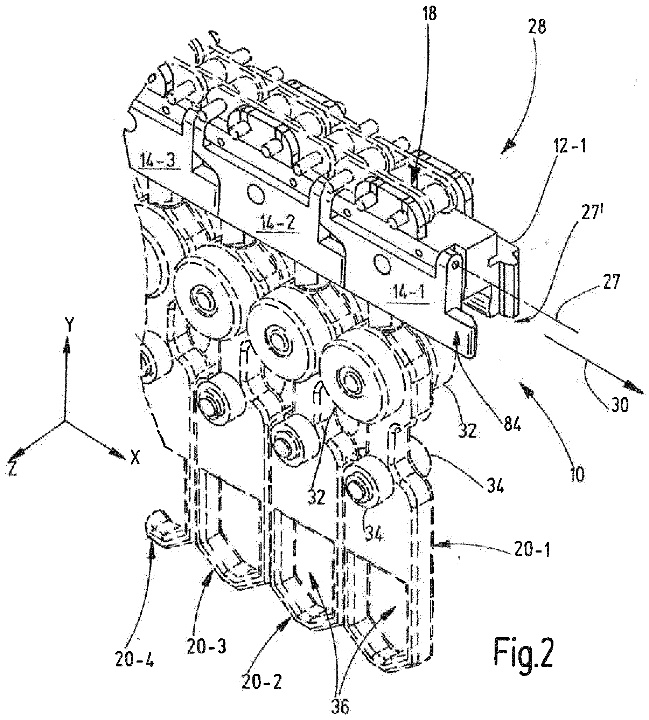

Fig. 2 zeigt eine perspektivische Ansicht einer Förderkette 28, die aus mehreren Kettengliedern 10 gemäß einer weiteren Ausführungsform gebildet ist. In der Fig. 2 sind drei Kettenglieder gezeigt, die mit ihren Hauptkörpern 12 an eine Antriebskette 18 gekoppelt sind. In der Fig. 2 sind die Hauptkörper 12 auf die nicht näher bezeichneten Bolzen der Antriebskette 18 vertikal von unten aufgesteckt.

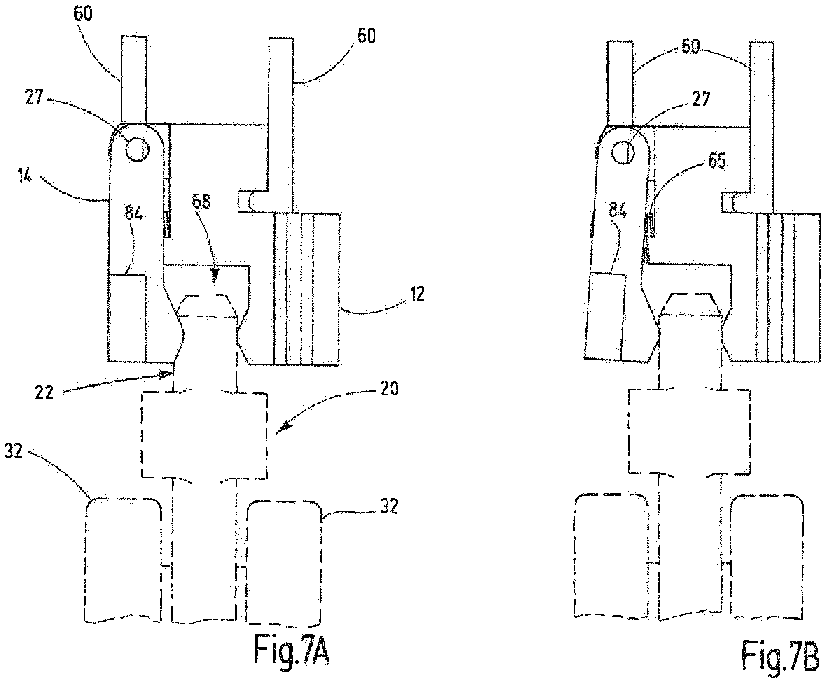

Die Fig. 7 zeigt das Kettenglied 10 gemäß der weiteren Ausführungsform in der Eingriffsstellung (Fig. 7A) und in der Freigabestellung (Fig. 7B).

Ferner sind in der Fig. 2 vier Adapter 20-1 bis 20-4 in einem aufgestauten Zustand gezeigt. Die drei dargestellten Schwenkkörper 14-1 bis 14-3 der Förderkette 28 befinden sich jeweils in ihrer Freigabestellung. Dies bedeutet, dass die Schwenkkörper 14-1 bis 14-3 um die Schwenkachse 27 im Uhrzeigersinn ausgelenkt sind, wie es durch einen Pfeil 27' angedeutet ist. Die Förderkette 28 wird in einer Förderrichtung X bewegt, die parallel zur positiven X-Richtung orientiert ist.

Es versteht sich, dass die hier offenbarten Kettenglieder 10 generell sowohl kurvengängig als auch höhengängig sind. Dies bedeutet, dass miteinander verbundene Kettenglieder 10 Steigungen und Gefälle in der Höhenrichtung Y sowie Kurven im gekoppelten Zustand durchführen können. Die Kettenglieder 10 sind dazu entsprechend eingerichtet, worauf hier aber nicht näher eingegangen wird.

Die Adapter 20 können ein oder mehrere Laufrollen 32 aufweisen. Die Adapter 20 können ein oder mehrere Führungsrollen 34 aufweisen. Die in der Fig. 2 gezeigten Adapter 20 weisen jeweils einen nicht näher bezeichneten Körper mit einer oder mehreren Öffnungen 36 zur Aufnahme von Bügeln (z.B. für Kleiderbügel oder Taschen) auf. Der Körper der Adapter 20 erstreckt sich in einer Transportstellung im Wesentlichen in der Vertikalen, wie es exemplarisch in der Fig. 3 gezeigt ist.

Die Fig. 3 zeigt eine teilweise geschnittene Ansicht der Förderkette 28 der Fig. 2 in einem Führungsprofil bzw. einer Führungsschiene 40. Die Führungsschiene 40 ist geschnitten dargestellt. Die Führungsschiene 40 weist einen oberen Bereich 42, einen mittleren Bereich 44 und einen unteren Bereich 46 auf. Eine optionale Symmetrieebene 48 der Führungsschiene 40 ist in Fig. 3 durch eine Strichlinie angedeutet. Die Führungsschiene 40 kann geschlossen oder teilweise offen ausgebildet sein. Die Führungsschiene 40 der Fig. 3 ist seitlich geschlossen und weist seitliche Wände 50 auf. Die Führungsschiene 40 umgibt einen Innenraum, in welchem die Förderkette 28, die Antriebskette 18 sowie Teile der Adapter 20 zwangsgeführt bewegt werden.

Die Führungsschiene 40 weist horizontal orientierte (Quer-)Stege 52 auf, die sich parallel zur Querrichtung Z erstrecken und die vorzugsweise jeweils einen Spalt unterschiedlicher Breite zwischen sich definieren, um die entsprechenden Komponenten, wie z.B. die Adapter 20, zwischen sich aufnehmen zu können. Die Laufrollen 32 sitzen bspw. auf unteren Stegen 52 auf, die wiederum einen Spalt in der Querrichtung Z zwischen sich definieren, um den Körper der Adapter 20 durchzulassen. Ähnliches gilt für mittlere Stege 52, die oberhalb der Laufrollen 32 angeordnet sind und die in der Querrichtung Z beabstandet zueinander sind, um den Mitnehmerabschnitt 22 der Adapter 20 durchzulassen. In dem mittleren Bereich 44 der Führungsschiene 40 sind auch wesentliche Teile der Förderkette 28 angeordnet, wie z.B. die Hauptkörper 12 und die Schwenkkörper 14. Weitere obere Stege 52 sind oberhalb der mittleren Querstege 52 vorgesehen, um die Antriebskette 18 und ggf. weitere Antriebsketten-Führungselemente aufzunehmen, um die Antriebskette 18 möglichst verschleißfrei und mit engen Toleranzen zu führen.

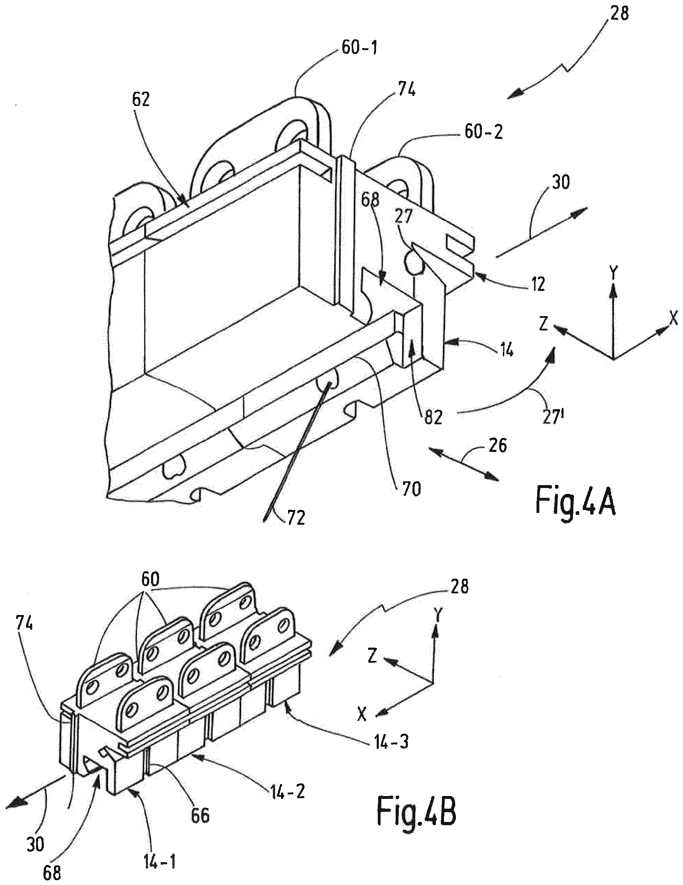

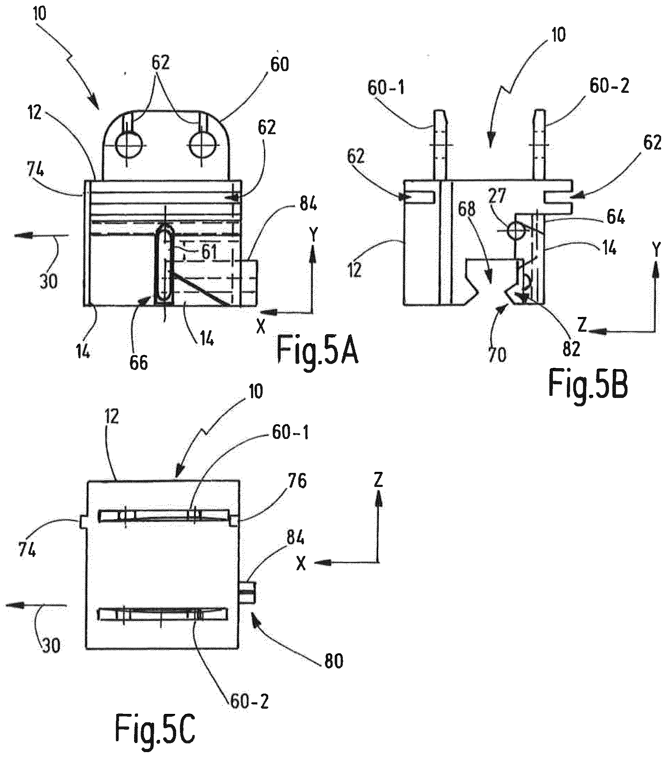

Die Figuren 4 und 5 zeigen eine erfindungsgemäße Ausführungsform des Kettenglieds 10, die ähnlich zur ersten Ausführungsform der Fig. 1 ist. Fig. 4A zeigt eine perspektivische Unteransicht einer Förderkette 28. Fig. 4B zeigt eine perspektivische Ansicht auf die Förderkette 28 der Fig. 4A von oben. In der Fig. 4A sind zwei Kettenglieder 10 angedeutet. In der Fig. 4B sind drei Kettenglieder gezeigt, die gemeinsam über die Verbindung mit der nicht dargestellten Antriebskette 18 die Förderkette 28 bilden. Die einzelnen Kettenglieder 10 sind in der Fig. 5 in einer Seitenansicht (Fig. 5A), einer Vorderansicht (Fig. 5B) und einer Draufsicht (Fig. 5C) gezeigt. Die dritte form- und kraftschlüssige Ausführungsform des Kettenglieds 10 wird nun unter gemeinsamer Bezugnahme auf die Figuren 4 und 5 beschrieben werden, wobei ein mehrteiliges Kettenglied 10 vorliegt.

Fig. 4 zeigt (Antriebsketten-)Verbindungselemente 60, die z.B. auf einer nicht näher bezeichneten Oberseite des Hauptkörpers 14 vorgesehen sind. Im Beispiel der Fig. 4 weist jedes Kettenglied 10 zwei Verbindungselemente 60-1 und 60-2 auf, die nicht näher bezeichnete Öffnungen zur Durchführung des Bolzens der Antriebskette 18 aufweisen. Über die Verbindungselemente 60 werden die Kettenglieder 10 mit der Antriebskette 18 verbunden. Die Verbindungselemente 60 können Einschnitte 62 (vgl. Fig. 2) aufweisen, um auf die Antriebskette 18 von unten vertikal aufgesteckt zu werden. Anschließend kann die zusammengebaute Förderkette 28 in ein Führungsprofil 40 eingeführt werden, wie es exemplarisch in Fig. 3 gezeigt ist.

Die erfindungsgemäße Ausführungsform des Kettenglieds 10 wird z.B. mit einer Blattfeder 64 in die Ausgangsstellung gezwungen. Die Blattfeder 64 ist z.B. in Fig. 5A gezeigt. Die Blattfeder 64 ist im Hauptkörper 12 fixiert. Der Schwenkkörper 14 weist eine vertikal orientierte Nut 66 auf, die zur Aufnahme der Blattfeder 64 eingerichtet ist. Die Blattfeder 64 stellt eine mögliche Implementierung des Federelements 16 dar. Eine andere Implementierung ist in der Schnittansicht der Fig. 6 gezeigt, wo das Federelement 16 als horizontal orientierte Spiralfeder 64 ausgebildet ist.

Zwischen dem Hauptkörper 12 und dem Schwenkkörper 14 ist in der Fig. 5 ein Hohlraum 68 definiert, der in Fig. 5B gezeigt ist. Der Hohlraum 68 dient zur Aufnahme des Adapters 20 bzw. des Mitnehmerabschnitts 22 (vgl. Fig. 1). Der Hohlraum 68 ist in der horizontalen Richtung 26 und in der vertikalen Richtung 24 so dimensioniert, dass die Adapter 20 aufnehmbar sind. Das Kettenglied 10, wie es in den Figuren 4 und 5 gezeigt ist, wird in der Eingriffsstellung form- und kraftschlüssig im Kettenglied 10 gehalten. Für den Formschluss sind im Hauptkörper 12 und im Schwenkkörper 14 entsprechende Ausnehmungen 72 vorgesehen, die in Fig. 4A gezeigt sind. Die Ausnehmungen 72 liegen sich in der horizontalen Richtung 26 gegenüber. Die Form der Ausnehmungen 72 ist so gewählt, dass sie an eine Kontur des Mitnehmerabschnitts 22 des Adapters 20 angepasst ist.

Der Hauptkörper 12 und der Schwenkkörper 14 können im Kopplungsbereich des Hohlraums 68 Aufnahmebacken 70 aufweisen, wie es in den Figuren 4 und 5 gezeigt ist. Die Aufnahmebacken 70 sind z.B. zangenförmig ausgebildet und dienen zum seitlich horizontalen Greifen der Mitnehmerabschnitte 22. Die Aufnahmebacken 70 weisen z.B. eine dreiecksförmige Grundfläche auf, wie es in Fig. 5B zu erkennen ist. Durch die dreieckige Form reduziert sich die Fläche, die im Staufall eine Reibung zwischen dem Glied 10 und dem Adapter 20 hervorruft.

Der Hauptkörper 12 kann an seiner stromabwärtigen Stirnseite, die hier nicht näher bezeichnet ist, eine Koppelnase 74 aufweisen. Die Koppelnase 74 korrespondiert mit einer Koppelnut 76, die sich ebenfalls in vertikaler Richtung in einer stromaufwärtigen Stirnseite des Hauptkörpers 12 erstreckt. Die Koppelnase 74 und die Koppelnut 76 bilden gemeinsam eine (berührungslose) Nut/Federverbindung zwischen benachbarten Kettengliedern 10, wie es exemplarisch in der Fig. 4B gezeigt ist. Es versteht sich, dass zwischen benachbarten Kettengliedern 10 vorzugsweise ein Spiel in der Förderrichtung 30 gelassen wird, z.B. um die Kurvengängigkeit der Förderkette 28 zu gewährleisten.

Auch die Schwenkkörper 14 selbst sind generell für eine Nut/Federkopplung mit benachbarten Schwenkkörpern 14 eingerichtet.

Bei der erfindungsgemäßen Ausführungsform der Figuren 4 und 5 ist im Bereich der stromabwärtigen Stirnseite des Schwenkkörpers 14 eine Aussparung 82 vorgesehen, die mit einer Nase 84 an einer stromaufwärtigen Stirnseite des Schwenkkörpers 14 korrespondiert. Über die Nasen 84 werden stromaufwärtige Schwenkkörper 14 mitausgelenkt, wenn einer der Schwenkkörper 14 der Kette 28 durch einen blockierten Adapter 20 seitlich horizontal ausgelenkt wird. In einer Draufsicht pflanzt sich die Auslenkung des Schwenkkörpers 14 des blockierten Adapters 20 sinusförmig stromaufwärts fort, wobei sich die Anpresskraft F_{A} (vgl. Fig. 1) kontinuierlich stromaufwärts verringert.

Generell wurde oben eine Schwenkbewegung des (Schwenk-)Körpers 14 beschrieben. Es versteht sich, dass die Schwenkbewegung auch durch eine translatorische Bewegung ersetzt werden könnte. In diesem Fall wäre der Schwenkkörper 14 durch einen Translationskörper zu ersetzen, der entsprechend im, am bzw. zum Hauptkörper 12 zu lagern ist.

### Bezugszeichenliste

- 10: Kettenglied
- 12: Hauptkörper
- 14: Schwenkkörper
- 16: Federelement
- 18: Antriebskette
- 20: Adapter (Carrier)
- 22: Koppelelement (z.B. Stift)/Mitnehmerabschnitt
- 24: vertikale Richtung
- 26: horizontale Richtung
- 27: Schwenkachse
- 27': Schwenkbewegung
- 28: Förderkette
- 30: Förderrichtung
- 32: Laufrollen
- 34: Führungsrollen
- 36: Öffnung/Bügelaufnahme
- 40: Profil/Führungsschiene
- 42: oberer Bereich von 40
- 44: mittlerer Bereich von 40
- 46: unterer Bereich von 40
- 48: Symmetrieebene
- 50: Seitenwand
- 52: (Quer-)Stege
- 60: Verbindungselement
- 62: Einschnitt
- 64: Blattfeder
- 65: Spiralfeder
- 66: Nut in 14
- 68: Hohlraum zwischen 12 und 14
- 70: Aufnahmebacken
- 72: Ausnehmung in 70
- 74: Koppelnase
- 80: Nut/Federkopplung von 14
- 82: Aussparung in 14
- 84: Nase von 14
- 100: Hängeförderanlage

## Patentansprüche

1. Kettenglied (10) für eine mehrgliedrige Förderkette einer Hängeförderanlage (100), die mit einer schleppenden Antriebskette (18) fest verbindbar ist, wobei das Kettenglied (10) eingerichtet ist, einen Hängeförder-Adapter (20) mittels eines seitlichen, horizontal quer zu einer Förderrichtung (30) wirkenden Kraftschlusses zu fördern, und wobei das Kettenglied (10) aufweist:
einen Hauptkörper (12), der längs der Förderrichtung (30) bewegbar und horizontal (26) quer zur Förderrichtung (30) im Wesentlichen starr in einem Führungsprofil (40), entlang dem das Kettenglied (10) geführt wird, lagerbar ist;
einen Schwenkkörper (14), der mit dem Hauptkörper (12) verbunden ist und der aus einer Ausgangsstellung im Wesentlichen horizontal (26) quer zur Förderrichtung (30) in eine Freigabestellung schwenkbar ist, wobei die Ausgangsstellung im Wesentlichen einer Eingriffsstellung entspricht, in welcher der Adapter (20) vom Kettenglied (10) mitgenommen wird; und
ein Federelement (16), das zwischen dem Hauptkörper (12) und dem Schwenkkörper (14) angeordnet ist und das, vorzugsweise in einem vorgespannten Zustand des Federelements (16), den Schwenkkörper (14) in die Eingriffsstellung zwingt;
wobei der Hauptkörper (12) und der Schwenkkörper (14) eingerichtet sind, in der Eingriffsstellung mittels des Federelements (16) einen Mitnehmerabschnitt (22) des Adapters (20) horizontal (26) quer zur Förderrichtung (30) kraftschlüssig zwischen sich halten, so dass der Adapter (20) vom Kettenglied (10) in der Förderrichtung (30) schleppbar ist,
wobei der Hauptkörper (14) und der Schwenkkörper (14) über eine Schwenkachse (27) aneinander gekoppelt sind und **dadurch gekennzeichnet, dass**
der Schwenkkörper (14) an einer stromabwärtigen Stirnseite eine Aussparung (82) aufweist, die mit einer Nase (84) an einer stromaufwärtigen Stirnseite des Schwenkkörpers (14) derart korrespondiert, dass über die Nase (84) stromaufwärtige andere Schwenkkörper (14) mitausgelenkt werden, wenn der Schwenkkörper (14) durch einen blockierten Adapter (20) seitlich horizontal ausgelenkt wird.

2. Kettenglied (10) nach Anspruch 1, wobei der Hauptkörper (12) und der Schwenckörper (14) jeweils eine zangenförmige Aufnahmebacke (70) aufweisen, die einen Hohlraum (68) zwischen sich definieren, in der der Mitnehmerabschnitt (22) des Adapters (20) aufnehmbar ist.

3. Kettenglied (10) nach einem der Ansprüche 1 bis 2, wobei der Hauptkörper (12) und der Schwenkkörper (14) gemeinsam eine zusätzliche formschlüssige Aufnahme für den Mitnehmerabschnitt (22) des Adapters (20) zwischen sich definieren, wobei die zusätzliche formschlüssige Aufnahme vorzugsweise durch vertikal angeordnete Ausnehmungen (72) definiert ist, die sich gegenüberliegen.

4. Kettenglied (10) nach einem der Ansprüche 1 bis 3, wobei der Hauptkörper (12) Kopplungselemente (74, 76) zwecks Kopplung an entsprechende Kopplungselemente (74, 76) benachbarter Schwenkkörper (10) aufweist.

5. Kettenglied (10) nach einem der Ansprüche 1 bis 4, wobei das Federelement (16) eine Spiralfeder ist, die im Wesentlichen horizontal (26) zwischen dem Hauptkörper (12) und dem Schwenkkörper (14) angeordnet ist, wobei die Spiralfeder derart vorgespannt ist und derart an den Hauptkörper (12) sowie an den Schwenkkörper (14) gekoppelt ist, dass der Schwenkkörper (14) in der Ausgangsstellung in Richtung des Hauptkörpers (12) gezwungen wird.

6. Kettenglied (10) nach einem der Ansprüche 1 bis 4, wobei das Federelement (16) eine Blattfeder (64) ist, die in der Ausgangsstellung im Wesentlichen vertikal zwischen dem Hauptkörper (12) und dem Schwenkkörper (14) angeordnet ist und derart an den Hauptkörper sowie an den Schwenkkörper (14) gekoppelt ist, dass der Schwenkkörper (14) im Falle einer horizontal seitlichen Auslenkung in Richtung des Hauptkörpers (12) gezwungen wird.

7. Kettenglied (10) nach einem der vorhergehenden Ansprüche, wobei der Hauptkörper (12) mindesten ein Verbindungselement (60) aufweist, um werkzeuglos dauerhaft auf die Antriebskette (18) gesteckt zu werden.

8. Kettenglied (10) nach einem der vorhergehenden Ansprüche, wobei eine Vorspannung und/oder Anordnung des Federelements (16) so gewählt ist, dass der Schwenkkörper (14) aus der Eingriffsstellung in Richtung (28) der Freigabestellung bewegt wird, sobald der Adapter (20) in der Förderrichtung (30) auf ein Hindernis trifft, während der Adapter (20) kraft- und/oder formschlüssig zwischen dem Hauptkörper (12) und dem Schwenkkörper (14) fixiert ist.

9. Förderkette (28) mit einer Vielzahl von Kettengliedern (10), wobei jedes Kettenglied (10) nach einem der vorhergehenden Ansprüche ausgebildet ist und mit einer Antriebskette (18) verbunden ist.

10. Hängeförderanlage (100) mit einer Förderkette nach Anspruch 9 und mit einem Antrieb, der vertikal, vorzugsweise von oben, in die Antriebskette (18) eingreift, um die Antriebskette (18) anzutreiben.

## Claims

1. A chain link (10) for a multi-link conveyor chain of an overhead-conveyor installation (100), which is rigidly connectable to a towing drive chain (18), wherein the chain link (10) is configured to convey an overhead-conveyor adapter (20) by means of a lateral frictional connection acting horizontally transversal to a conveying direction (30), and wherein the chain link (10) comprises:
a main body (12), which is movable along the conveying direction (30) and which is supportable horizontally (26) transversal to the conveying direction (30) substantially rigidly within a guiding profile (40) along which the chain link (10) is guided;
a pivotal body (14), which is connected to the main body (12), and is pivotable from a starting position substantially horizontally (26) transversal to the conveying direction (30) into a releasing position, wherein the starting position substantially corresponds to an engaging position in which the adapter (20) is carried by the chain link (10); and
a spring element (16) arranged between the main body (12) and the pivotal body (14), and forcing, preferably in a biased state of the spring element (16), the pivotal body (14) into the engaging position;
wherein the main body (12) and the pivotal body (14) are configured to hold, in the engaging position by means of the spring element (16), a carrying portion (22) of the adapter (20) horizontally (26) transversal to the conveying direction (30) in a force-closed manner between each other, so that the adapter (20) of the chain link (10) is towable in the conveying direction (30),
wherein the main body (12) and the pivotal body (14) are coupled to each other by means of a pivotal axis (27), and
**characterized in that** the pivotal body (14) comprises, at a downstream face surface, a recess (82) corresponding to a nose (84) at an upstream face surface of the pivotal body (14) such that other pivotal bodies (14) are co-deflected by the nose (84) when the pivotal body (14) is laterally deflected horizontally by a blocked adapter (20).

2. The chain link (10) of claim 1, wherein the main body (12) and the pivotal body (14) respectively comprise a pincer-shaped receiving jaw (70) defining a cavity (68) therebetween, in which the carrying portion (22) of the adapter (20) is receivable.

3. The chain link (10) of any of claims 1 to 2, wherein the main body (12) and the pivotal body (14) commonly define therebetween an additional form-closed receptacle for the carrying portion (22) of the adapter (20), wherein the additional form-closed receptacle is preferably defined by vertically arranged opposite recesses (72).

4. The chain link (10) of any of claims 1 to 3, wherein the main body (12) comprises coupling elements (74, 76) for the purpose of coupling to corresponding coupling elements (74, 76) of adjacent pivotal bodies (10).

5. The chain link (10) of any of claims 1 to 4, wherein the spring element (16) is a helical spring arranged substantially horizontal (26) between the main body (12) and the pivotal body (14), wherein the helical spring is biased and coupled to both the main body (12) and the pivotal body (14) such that the pivotal body (14) is forced, in the starting position, towards the main body (12).

6. The chain link (10) of any of claims 1 to 4, wherein the spring element (16) is a leaf spring (64), which is arranged in the starting position substantially vertical between the main body (12) and the pivotal body (14), and coupled to both the main body and the pivotal body (14) such that the pivotal body (14) is forced towards the main body (12) in case of a horizontal lateral deflection.

7. The chain link (10) of any of the preceding claims, wherein the main body (12) comprises at least one connecting element (60) for being inserted permanently onto the drive chain (18) without a tool.

8. The chain link (10) of any of the preceding claims, wherein bias and/or arrangement of the spring element (16) is selected such that the pivotal body (14) is moved from the engaging position towards (28) the releasing position as soon as the adapter (20) contacts an obstacle in the conveying direction (30), while the adapter (20) is fixed in a frictional-closed and/or form-closed manner between the main body (12) and the pivotal body (14).

9. A conveyor chain (28) including a plurality of chain links (10), wherein each chain link (10) is formed in accordance with any one of the preceding claims, and connected to a drive chain (18).

10. An overhead-conveyor installation (100) including a conveyor chain of claim 9 and a drive engaging vertically, preferably from above, in the drive chain (18) for driving the drive chain (18).

## Revendications

1. Maillon de chaîne (10) pour une chaîne de convoyeur à plusieurs maillons d'une installation de convoyeur suspendu (100) qui peut être reliée solidement à une chaîne d'entraînement (18) de traction, le maillon de chaîne (10) étant conçu pour transporter un adaptateur de convoyeur suspendu (20) au moyen d'une adhérence latérale agissant horizontalement en travers d'une direction de convoyage (30), et le maillon de chaîne (10) présentant :
un corps principal (12) qui peut être déplacé le long de la direction de convoyage (30) et peut être monté horizontalement (26) en travers de la direction de convoyage (30) de manière substantiellement rigide dans un profilé de guidage (40) le long duquel le maillon de chaîne (10) est guidé ;
un corps pivotant (14) qui est relié au corps principal (12) et qui peut pivoter à partir d'une position de départ substantiellement horizontalement (26) en travers de la direction de convoyage (30) jusqu'à une position de libération, la position de départ correspondant substantiellement à une position de mise en prise dans laquelle l'adaptateur (20) est entraîné par le maillon de chaîne (10) ; et
un élément faisant ressort (16) qui est disposé entre le corps principal (12) et le corps pivotant (14) et qui, de préférence dans un état précontraint de l'élément faisant ressort (16), force le corps pivotant (14) dans la position de mise en prise ;
le corps principal (12) et le corps pivotant (14) étant conçus dans la position de mise en prise pour retenir entre eux par adhérence, au moyen de l'élément faisant ressort (16), une partie d'entraînement (22) de l'adaptateur (20) horizontalement (26) en travers de la direction de convoyage (30) de sorte que l'adaptateur (20) peut être tiré par le maillon de chaîne (10) dans la direction de convoyage (30),
le corps principal (14) et le corps pivotant (14) étant accouplés l'un à l'autre par l'intermédiaire d'un axe pivotant (27), et
**caractérisé en ce que** le corps pivotant (14) présente sur une face frontale aval un évidement (82) qui correspond à un taquet (84) sur une face frontale amont du corps pivotant (14) de telle sorte que d'autres corps pivotants (14) amont sont également déviés par l'intermédiaire du taquet (84) lorsque le corps pivotant (14) est dévié de manière latéralement horizontale par un adaptateur (20) immobilisé.

2. Maillon de chaîne (10) selon la revendication 1, dans lequel le corps principal (12) et le corps pivotant (14) présentent respectivement une mâchoire de réception en forme de pince (70) définissant entre elles une cavité (68) dans laquelle la partie d'entraînement (22) de l'adaptateur (20) peut être reçue.

3. Maillon de chaîne (10) selon l'une quelconque des revendications 1 à 2, dans lequel le corps principal (12) et le corps pivotant (14) définissent ensemble entre eux un logement supplémentaire à complémentarité de forme pour la partie d'entraînement (22) de l'adaptateur (20), le logement supplémentaire à complémentarité de forme étant de préférence défini par des évidements (72) disposés verticalement.

4. Maillon de chaîne (10) selon l'une quelconque des revendications 1 à 3, dans lequel le corps principal (12) présente des éléments d'accouplement (74, 76) en vue de l'accouplement à des éléments d'accouplement (74, 76) correspondants de corps pivotants (10) voisins.

5. Maillon de chaîne (10) selon l'une quelconque des revendications 1 à 4, dans lequel l'élément faisant ressort (16) est un ressort en spirale qui est disposé de manière substantiellement horizontale (26) entre le corps principal (12) le corps pivotant (14), le ressort en spirale étant précontraint de telle sorte et accouplé au corps principal (12) ainsi qu'au corps pivotant (14) de telle sorte que le corps pivotant (14) est forcé dans la position de départ en direction du corps principal (12).

6. Maillon de chaîne (10) selon l'une quelconque des revendications 1 à 4, dans lequel l'élément faisant ressort (16) est un ressort à lames (64) qui est disposé dans la position de départ de manière substantiellement verticale entre le corps principal (12) et le corps pivotant (14) et est accouplé au corps principal ainsi qu'au corps pivotant (14) de telle sorte que le corps pivotant (14) est forcé en direction du corps principal (12) en cas de déviation horizontalement latérale.

7. Maillon de chaîne (10) selon l'une quelconque des revendications précédentes, dans lequel le corps principal (12) présente au moins un élément de raccordement (60) afin d'être inséré sur la chaîne d'entraînement (18) de manière permanente et sans outil.

8. Maillon de chaîne (10) selon l'une quelconque des revendications précédentes, dans lequel une précontrainte et/ou une disposition de l'élément faisant ressort (16) est/sont sélectionnée(s) de telle sorte que le corps pivotant (14) est déplacé de la position de mise en prise en direction (28) de la position de libération dès que l'adaptateur (20) rencontre un obstacle dans la direction de convoyage (30), alors que l'adaptateur (20) est fixé par adhérence et/ou par complémentarité de forme entre le corps principal (12) et le corps pivotant (14).

9. Chaîne de transport (28) comprenant une pluralité de maillons de chaîne (10), dans laquelle chaque maillon de chaîne (10) est réalisé selon l'une quelconque des revendications précédentes et est relié à une chaîne d'entraînement (18).

10. Installation de convoyeur suspendu (100) comprenant une chaîne de transport selon la revendication 9 et un dispositif d'entraînement qui vient en prise verticalement, de préférence par le haut, avec la chaîne d'entraînement (18) afin d'entraîner la chaîne d'entraînement (18).
